# EUROPEAN PATENT APPLICATION

(11) **EP 1 935 931 A1**
(43) Date of publication of application: **25.06.2008**
(21) Application number: 07150117.5
(22) Date of filing: 19.12.2007
(51) Int. Cl.: C08J 9/08, C08K 5/00, C08K 5/098, C08L 27/12, H01B 3/44, H01B 7/02, H01B 7/295, H01B 11/04, H01B 13/14

(54) **High processing temperature foaming polymer composition**

(30) Priority: 20.12.2006 EP 06301272
(71) Applicant: Nexans, 75008 Paris (FR)
(72) Inventor: The designation of the inventor has not yet been filed
(74) Representative: Feray, Valérie

(57) **Abstract**

The present invention concerns a foaming composition comprising a polymer having a melting temperature above 250°C, and an organic salt as chemical foaming agent having a decomposition temperature above the melting point of the polymer, characterized in that said organic salt is selected from the group comprising citrate derivatives and tartrate derivatives, or a mixture thereof.

## Description

The present invention relates to a foaming polymer composition, in particular a foaming fluoropolymer composition, an extrusion method of said composition, an electrical cable comprising an insulated layer and/or a cross spacer obtained by said method.

More particularly this composition is for use in the manufacture of insulated material for electrical cables (power or communication cables), such as LAN cables, aeronautic cables, and automotive cables.

Fluoropolymers are generally quite expensive and it is desirable to minimize the amount of insulated material in providing a foaming fluoropolymer composition.

However no chemical foaming agent providing a decomposition temperature superior to the melting point of fluoropolymer exits on the market.

Document US-6 064 008 proposes a flame retarding communication cable comprising elongated electrical conductor surrounded by a layer of insulating material, said insulating material comprising a chemically blown fluorinated polymer having a melting point of greater than about 248°C.

The insulated material is foamed using a chemical foaming agent, which decomposes at a temperature above the temperature needed to melt the fluorinated polymer and the gas evolved from the chemical foaming agent.

A particularly suitable chemical foaming agent is the barium salt of 5-phenyltetrazole.

However such chemical foaming agent presents a decomposition temperature below the fluorinated polymer having a melting point greater than about 248°C.

According to Plastic Additive Handbook, 5th edition, H.Zweifel, pp.711, the barium salt of 5-phenyltetrazole begins to decompose at a temperature below 248°C, e.g. 240°C.

In the case of said prior art document, the decomposition of the barium salt of 5-phenyltetrazole occurs too early during the extrusion process and thus released gaseous products are not efficiently diluted and voids are not dispersed into the molten fluorinated polymer.

Therefore the composition with such chemical foaming agent cannot provide a chemically foamed fluorinated polymer with homogeneous aspect presenting good mechanical and electrical properties due to the difficulty of controlling the foaming process.

It is an object of the present invention to overcome the drawback of the prior art in proposing a foaming composition comprising a polymer having a melting temperature above 250°C and a new type of organic salt as chemical foaming agent having a decomposition temperature above the melting point of the polymer.

In accordance with the present invention, the technical solution resides in that the organic salt is selected from the group comprising citrate derivatives and tartrate derivatives, or a mixture thereof.

Said citrate and tartrate derivatives, decomposing from temperature above 250°C to yield carbon dioxide, advantageously provide a homogeneous polymer foaming structure during high processing temperature with a foaming degree and a void structure significantly improved.

In addition, said foaming composition provides high performances dielectric properties in improving the electrical transmission characteristics of the resulting cables, in particular in the domain of LAN cables.

More particularly, said citrate derivative is selected from the group comprising sodium citrate, zinc citrate, calcium citrate, magnesium citrate, ferric citrate, potassium citrate and ferric ammonium citrate, or a mixture of thereof, and said tartrate derivative is selected from the group comprising potassium antimonyl tartrate, sodium arsenyl tartrate and diamino cyclohexane tartrate, or a mixture of thereof.

In a preferred embodiment, the polymer is a fluoropolymer, more particularly said fluoropolymer is selected from the group comprising fluorinated ethylene propylene copolymer, tetrafluoroethlene perfluoroalkoxy vinyl ether copolymer, ethylene tetrafluoroethylene copolymer, ethylene chlorotrifluoroethylene copolymer and perfluoroalkoxy polymer, or a mixture of thereof.

Furthermore, such foaming composition further allows to minimize the quantity of fluoropolymers required, which are expensive.

In a variant, said composition further comprises a nucleating agent, more particularly said nucleating agent is boron nitride.

In addition, it is preferable that the quantity of nucleating agent is comprised between 0,2% and 2% in weight of the composition, more particularly between 0,2% and 1% in weight of the composition in order that the extruded composition keeps good mechanical properties.

Another object is an extrusion method comprising the following steps:
- blending a foaming composition according to the present invention above the temperature needed to melt the polymer and below the temperature needed to decompose the organic salt, and
- extruding said composition above the temperature needed to decompose the organic salt.

Another object is an electrical cable comprising an insulating layer obtained by the extrusion method according to the present invention.

Another object is an electrical cable comprising a cross spacer obtained by the extrusion method according to the present invention.

Cross spacer is used in LAN cable construction in order to reduce crosstalks between twisted pairs.

Other characteristics and advantages of the invention are described below in detail in the following description, which is given by way of non-limiting illustration, taken in conjunction with the drawings, in which:
- FIG. 1 is a schematic view of an extrusion process according to the present invention,
- FIG. 2 is a cross sectional view of an electrical cable according to the present invention, and
- FIG. 3 is a cross sectional view of a LAN cable according to the present invention.

The polymer melting temperatures as well as the chemical foaming agent decomposition temperatures or temperature ranges, mentioned all over the present description, can be determined by methods which are well-known by the man skilled in the art, such as preferably the Differential Scanning Calorimetry (DSC) method, or the Differential Thermal Analysis (DTA) method or the Thermomechanical Analysis (TMA) method.

In order to control the structure of the foam such as void degree and void size, the thermal decomposition of the chemical foaming agent must take place in a precise range of temperature, e.g. a processing window temperature above 250°C.

For example, decomposition temperature range of calcium citrate is comprised between 350 and 400°C and decomposition temperature range of zinc citrate is comprised between 300 and 340°C.

In other words, in said decomposition temperature ranges, chemical foaming agents of the present invention release gaseous products, ie. carbon dioxide.

The chemical foaming agent decomposition of the present invention occurs in the polymer melt inside the compression zone of the extruder and bubble growth and void dispersion are controlled in the processing window temperature of said compression zone.

More particularly, the processing window concerning fluoropolymers that have a melting point above 250°C, such as tetrafluoroethylene hexafluoropropylene copolymer, tetrafluoroethylene perfluoroalkoxy vinyl ether copolymer, ethylene tetrafluoroethylene copolymer, ethylene chlorotrifluoroethylene copolymer, is comprised between 280°C and 430°C.

The following non-limiting example shows the potential of calcium citrate as chemical blowing agents for polymer having a melting temperature above 250°C such as fluorinated ethylene propylene copolymer (FEP).

For that, an extruded composition according to the invention is prepare in using a high fluidity FEP grade (MFI = 25) obtained from Daikin, calcium citrate tetrahydrate from Sigma-Aldrich and boron nitride from General Electric Advanced Ceramics.

Prior to the preparation of the composition, calcium citrate is dried 4 hours at 180°C.

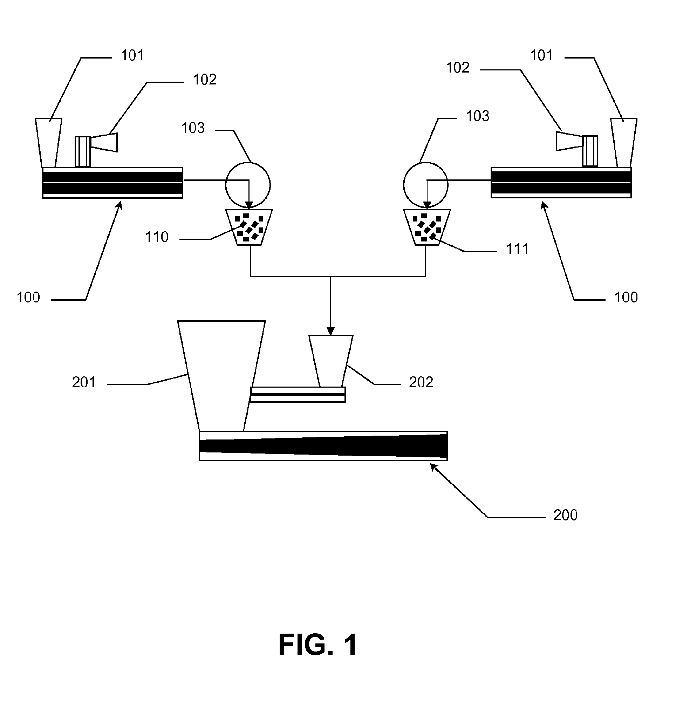

According to FIG. 1, in a first step of compounding, a first compound of FEP comprising 5% in weight of dried calcium citrate is prepared on a Berstoff ZE-25 twin-screw extruder 100 at a temperature below 350°C to obtain first compound pellets 110 by a pelletizer 103.

The temperature extrusion profile of the first step of compounding is shown in table 1, the temperature range being above the temperature needed to melt the FEP.

**Table 1**

| Zone | Temperature (°C) |
|---|---|
| 1 | 20 |
| 2 | 240 |
| 3 | 260 |
| 4 | 265 |
| 5 | 270 |
| 6 | 268 |
| 7 | 265 |
| 8 | 265 |
| 9 | 265 |
| Die | 250 |

More particularly, according to FIG. 1, a virgin FEP resin is introduced in a first feed hopper 101 in zone 1 and the calcium citrate is introduced in a second feed hopper 102 in zone 4 of the twin-screw extruder 100.

Advantageously, as the temperature of said twin-screw extruder 100 is below the temperature needed to decompose the calcium citrate, the pellets obtained from the first compound are unfoamed.

In a second step of compounding, a second compound of FEP comprising 5% of weight of boron nitride is prepared in the same conditions used during the first step of compounding to obtain second compound pellets 111.

More particularly, according to FIG. 1, a virgin FEP resin is introduced in a first feed hopper 101 in zone 1 and the boron nitride is introduced in a second feed hopper 102 in zone 4 of the twin-screw extruder 100.

A composition comprising the first and second compound pellets 110, 111 and a quantity of virgin FEP resin is then introduced in the feed hopper of a single-screw extruder 200 with a screw of 30 mm in diameter and an L/D ratio of 30.

More particularly, said virgin FEP resin is introduced in a first feed hopper 201. A second feed hopper 202, in communication with said first feed hopper 201, is fed by the first and second compound pellets 110, 111.

Said composition, e.g. composition 1, is detailed in Table 2.

**Table 2**

| Composition 1 | Quantity (phr) |
|---|---|
| Vrigin FEP resin | 100 |
| Calcium citrate compound (ie. first compound) | 3 |
| Boron nitride compound (ie. second compound) | 10 |

In another embodiment, all the ingredients quantity of composition 1 listed in Table 2 can directly be weighted and introduced at the same time in the feed hopper of the single-screw extruder.

Then, the composition 1 is extruded, by example, on a copper wire to form a foamed insulated layer.

The temperature extrusion profile of the composition 1 is shown in table 3, the temperature range being above the temperature needed to melt the FEP.

**Table 3**

| Zone | Temperature (°C) |
|---|---|
| Zone 1 | 330 |
| Zone 2 | 395 |
| Zone 3 | 385 |
| Zone 4 | 400 |
| Cross head / Die | 400 |

Advantageously, as the temperature of said single-screw extruder is above the temperature needed to decompose the calcium citrate, the foamed composition thus obtained presents a homogeneous structure with a foaming degree and a void structure significantly improved.

In view of the present example, calcium citrate begins to decompose in zone 2 of the single-screw extruder once the FEP is completely melted.

Hence, carbon dioxide is efficiently diluted in said melted FEP.

Said extrusion step easily allows to control the foaming process, especially void size in order to optimise the quality of the foamed composition.

The choice of the organic salt of the present invention avoids any chemical foaming agent anticipated decomposition in said extrusion step, said anticipated decomposition resulting of an inhomogeneous mixture, and thus an inhomogeneous foamed structure.

The line speed and the single-screw speed of the extruded processing conditions are respectively of 50m/mn and 30 rpm.

Temperatures, line speed and screw speed in the extruder vary depending on extruder type, particular material, desired properties and applications.

Temperatures generally range from about 250 to 500°C, and preferably range from about 300 to 450°C, according to the desired application.

Line speed generally ranges from about 30m/mm to 500m/mm according to the desired application.

Screw speed generally ranges from about 10 to 100 rpm, according to the desired application.

After extruding the composition 1 on the copper wire, the foaming density, or in other words the void degree, is evaluated on Mettler-Toledo weighing equipment by measuring the weight deviation of the insulated layer between air and ethanol.

The structure of the insulated layer is homogeneous and presents therefore a high insulation level.

The measured foaming density is of 29 % with a void maximum size of 90 µm.

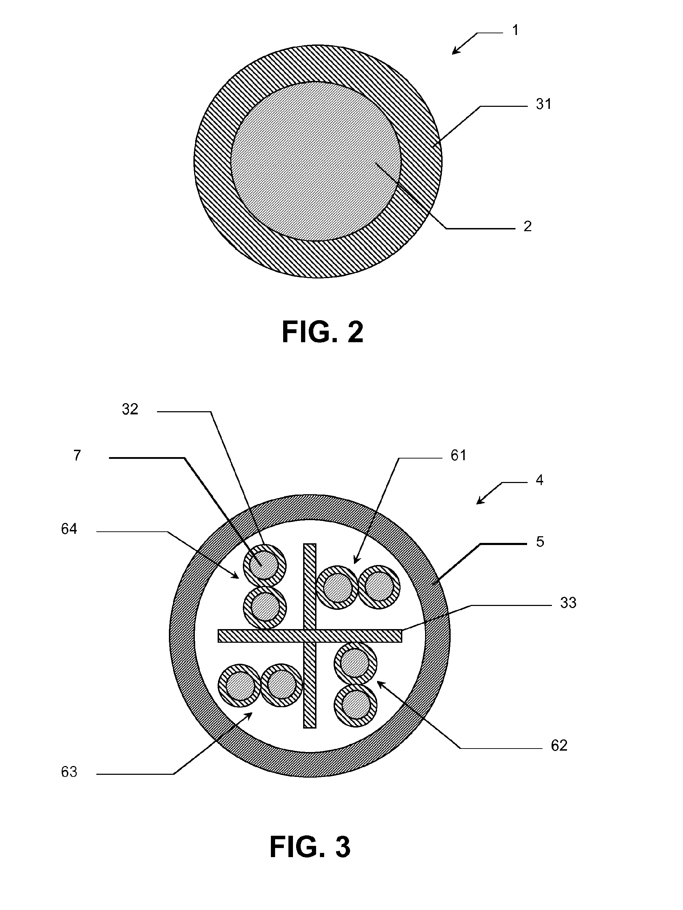

According to the FIG. 2, the cable 1 represents an electrical cable comprising, by way of example, a transmission element 2 such as an electrical conductor, e.g. made of copper, surrounded by an insulated layer 31 made from the extruded foaming composition according to the invention.

The cable of FIG. 3 represents an electrical communication cable 4, more particularly a category 6 LAN cable, comprising a sheath 5, made by example of halogen free fire resistant polyethylene (HFFR PE), polyvinyl chloride (PVC) or any type of limited combustible material.

Furthermore, said cable 4 comprises four twisted pairs of conductors, 61, 62, 63 and 64, respectively.

Each conductor of a twisted pair, in turn, comprises a metal, e.g. copper, core 7 enclosed within an insulated layer 32 made from the extruded foaming composition according to the invention.

Such insulated layer provides very high dielectric performance, such property being required by LAN cable.

A cross spacer 33 separates the four pairs 61, 62, 63, 64 of conductors from each other.

It is well known that cross spacer improves the crosstalk performance and the impedance of electrical communication cable.

Advantageously, said cross spacer 33 can be made by extrusion from the foaming composition according to the present invention, providing optimised performance of said electrical communication cable.

The composition 1 of the table 2 is introduced in the feed hopper of a single-screw extruder as described previously.

The temperature profile of the extrusion of said composition is shown in table 4, the temperature range being above the temperature needed to melt the FEP.

**Table 4**

| Zone | Temperature (°C) |
|---|---|
| Zone 1 | 280 |
| Zone 2 | 360 |
| Zone 3 | 395 |
| Zone 4 | 395 |
| Cross head / Die | 395 |

In view of the present example, calcium citrate begins to decompose in zone 2 of the single-screw extruder once the FEP is completely melted.

The measured foaming density is of 29 % with a void maximum size of 100µm.

In other embodiments, each conductor of the LAN cable 4 can be surrounded by an insulated layer made from the foaming composition of the present invention and comprise a cross spacer made from a different material, and vice versa.

## Claims

1. Foaming composition comprising:
- a polymer having a melting temperature above 250°C, and
- an organic salt as chemical foaming agent having a decomposition temperature above the melting point of the polymer,
**characterized in that** said organic salt is selected from the group comprising citrate derivatives and tartrate derivatives, or a mixture thereof.

2. Foaming composition according to claim 1, **characterized in that** said citrate derivative is selected from the group comprising sodium citrate, zinc citrate, calcium citrate, magnesium citrate, ferric citrate, potassium citrate and ferric ammonium citrate, or a mixture thereof.

3. Foaming composition according to claim 1, **characterized in that** said tartrate derivative is selected from the group comprising potassium antimonyl tartrate, sodium arsenyl tartrate and diamino cyclohexane tartrate, or a mixture thereof.

4. Foaming composition according to one of the claims 1 to 3, **characterized in that** said polymer is a fluoropolymer.

5. Foaming composition according to claim 4, **characterized in that** said fluoropolymer is selected from the group comprising tetrafluoroethylene hexafluoropropylene copolymer, tetrafluoroethlene perfluoroalkoxy vinyl ether copolymer, ethylene tetrafluoroethylene copolymer, ethylene chlorotrifluoroethylene copolymer, or a mixture thereof.

6. Foaming composition according to one of the claims 1 to 5, **characterized in that** said composition further comprises a nucleating agent.

7. Foaming composition according to claim 6, **characterized in that** said nucleating agent is boron nitride.

8. Foaming composition according to claim 6 or 7, **characterized in that** the quantity of nucleating agent is comprised between 0,2% and 2% in weight of the composition, more particularly between 0,2% and 1% in weight of the composition.

9. Extrusion method comprising the following steps:
- blending a foaming composition according to claims 1 to 8 above the temperature needed to melt the polymer and below the temperature needed to decompose the organic salt, and
- extruding said composition above the temperature needed to decompose the organic salt.

10. Electrical cable (1) comprising an insulating layer (31) obtained by the extrusion method according to claim 9.

11. Electrical cable (4) comprising a cross spacer (33) obtained by the extrusion method according to claim 9.
